# EUROPÄISCHE PATENTSCHRIFT

(11) **EP 1 028 121 B1**
(45) Veröffentlichungstag und Bekanntmachung des Hinweises auf die Patenterteilung: **18.07.2001**
(21) Anmeldenummer: 00102104.7
(22) Anmeldetag: 03.02.2000
(51) Int. Cl.: C07F 7/14

(54) **Verfahren zur Herstellung von Alkylsilanen mit sperrigen Alkylresten**
Process for preparing alkylsilanes with bulky alkyl groups
Procédé de préparation d'alkylsilanes avec un groupement alkyle volumineux

(30) Priorität: 11.02.1999 DE 19905752
(43) Veröffentlichungstag der Anmeldung: 16.08.2000
(73) Patentinhaber: Wacker-Chemie GmbH, 81737 München (DE)
(72) Erfinder: Geisberger, Gilbert, Dr., 84503 Altötting (DE); Lindner, Tassilo, Dr., 84561 Mehring-Öd (DE); Reitmeier, Rudolf, Dr., 84489 Burghausen (DE)
(74) Vertreter: Fritz, Helmut, Dr.

(56) Entgegenhaltungen:
- EP-A- 0 602 922
- US-A- 5 663 400

## Beschreibung

Die Erfindung betrifft ein Verfahren zur Herstellung von Di- und Trialkylsilanen mit sperrigen Alkylresten durch Hydrosilylierung von wasserstoffhaltigen Silanen mit Alkenen in Gegenwart von Übergangsmetallkatalysator und Aktivator.

Beispielsweise werden Dialkyldialkoxysilane mit sperrigen Alkylresten am Silicium inzwischen von fast allen größeren Polypropylenherstellern für ihre Ziegler-Katalysatoren der neuesten Generation gesucht. Besonders gefragt sind dabei Silane mit kurzkettigen, verzweigten Alkyl- sowie Cycloalkylgruppen. Diese Silane müssen in hoher Reinheit eingesetzt werden. Diese Silane wurden bis vor kurzem technisch ausschließlich ausgehend von Chlorsilanen oder Alkoxysilanen auf dem teueren metallorganischen Weg, d. h. unter Einsatz von großen Mengen an Metallen wie Natrium oder Magnesium sowie Lösungsmitteln hergestellt, wobei dementsprechend viel metallhaltige Nebenprodukte zu entsorgen waren.

Alkyl- oder Dialkylsilane, die neben direkt an Silicium gebundenem Wasserstoff noch Chloratome und/oder Alkoxyreste aufweisen, addieren in Gegenwart von Edelmetallkatalysatoren in zufriedenstellender Weise nur an lineare Alkene mit endständiger Doppelbindung, sogenannte α-Olefine. So führt beispielsweise die Hydrosilylierung von Silanen, wie Dichlorsilan, die 2 direkt an Silicium gebundene Wasserstoffatome aufweisen, mit verzweigten oder cyclischen Alkenen, die mindestens 3 Kohlenstoffe aufweisen, nur zu einem Monoalkylchlorsilan, auch wenn Alken im Überschuß vorliegt.

In der US-A-5,663,400 ist ein Hydrosilylierungsverfahren zur Herstellung von Di- und Trialkylsilanen mit sperrigen Alkylresten beschrieben, bei dem die Hydrosilylierung von wasserstoffhaltigen Silanen mit sperrigen Alkenen in Gegenwart von Übergangsmetallkatalysator und Aktivatoren stattfindet. Als Aktivatoren werden Kohlenwasserstoffe eingesetzt, die als funktionelle Gruppen Aldehyd-, Keto- oder Epoxygruppen oder Halogenatome aufweisen. Dabei entstehen viele unterschiedliche teilweise schwer abtrennbare Nebenprodukte. Dadurch ist es schwierig, hochreine Produkte zu erhalten.

Der vorliegenden Erfindung liegt die Aufgabe zugrunde, ein Verfahren zur Herstellung von Di- und Trialkylsilanen bereitzustellen, bei denen mindestens ein Alkylrest verzweigt oder cyclisch ist oder mindestens 3 Kohlenstoffe aufweist und die Silane noch Chloratome und/oder Alkoxyreste aufweisen, wobei nur wenige und leicht abtrennbare Nebenprodukte entstehen.

Die Erfindung betrifft ein Verfahren zur Herstellung von Di- und Trialkylsilanen der allgemeinen Formel (I)

RₐR¹ _{b}SiX_{c} (I),

bei dem
Mono- oder Dialkylsilane der allgemeinen Formel (II)

R¹ _{b}SiHₐX_{c} (II),

mit Alkenen **A** mit mindestens 3 Kohlenstoffatomen, welche gegebenenfalls mit Fluor-, Chlor-, Bromatomen oder Cyanogruppen substituiert sind,
in Gegenwart von Übergangsmetallkatalysator und Trihalogensilan der allgemeinen Formel (III)

R²SiY₃ (III),

als Aktivator, umgesetzt werden,
wobei in den vorstehenden allgemeinen Formeln (I) bis (III)
- **R**: gegebenenfalls mit Fluor-, Chlor-, Bromatomen oder Cyano-gruppen substituierte verzweigte oder cyclische Kohlenwasserstoffreste mit mindestens 3 Kohlenstoffatomen,
- **R**^{**1**}: gegebenenfalls mit Fluor-, Chlor-, Bromatomen oder Cyano-gruppen substituierte Alkylreste,
- **R**^{**2**}: Wasserstoffatom oder gegebenenfalls mit Fluor-, Chlor-, Bromatomen oder Cyanogruppen substituierte Alkylreste,
- **X**: Fluor-, Chlor-, Bromatome oder gegebenenfalls mit Fluor-, Chlor-, Bromatomen oder Cyanogruppen substituierte Alkoxyreste mit 1 bis 18 Kohlenstoffatomen,
- **Y**: Fluor-, Chlor- oder Bromatome,
- **a**: die Werte 1 oder 2,
- **b**: die Werte 1 oder 2 und
- **c**: die Werte 1 oder 2
bedeuten.

In den vorstehenden allgemeinen Formeln (I) und (II) beträgt die Summe aus **a, b** und **c** den Wert 4.

Bei diesem Verfahren entstehen weniger und leichter abtrennbare Nebenprodukte, als bei den bekannten Hydrosilylierungsverfahren zur Herstellung von Di- und Trialkylsilanen der allgemeinen Formel (I). Insbesondere werden dem Verfahren keine Aktivatoren zugeführt, die funktionelle Gruppen enthalten, welche im Hydrosilylierungsverfahren nicht vorhanden sind und zusätzlich weitere Nebenprodukte bilden können.

Die vorstehende Umsetzung ist besonders wichtig für die Addition von Alkenen **A**, welche sterisch anspruchsvoll, nämlich verzweigt oder cyclisch sind. Aber auch lineare Alkene ab 5 Kohlenstoffatome werden ohne Aktivator besonders schlecht addiert. Insbesondere werden erfindungsgemäß Alkene bis 18 Kohlenstoffatome besonders leicht addiert. Die Alkene **A** können eine oder auch mehrere ungesättige C=C-Bindungen im Molekül haben.

Beispiele für die sterisch anspruchsvollen Alkene **A** sind Cyclopenten, Cyclohexen, Cyclobuten, Cycloocten, Cyclopentadien, Norbornen (Bicyclohepten), Cyclooctadien, Cyclohexadien, 3-Methylcyclopenten, 3-Methylcyclopentadien, Isobuten, 2,3-Dimethyl-1-buten, 2,3-Dimethyl-2-buten, 3,3-Dimethylbuten, 2,4,4-Trimethyl-1-penten (Diisobutylen) oder 4-Methylen-2,2,6,6-tetramethylheptan (Triisobutylen).

Der Rest **R** entsteht durch Addition des Alkens **A** an die Si-H-Gruppe im Silan der allgemeinen Formel (II).

Der Rest **R**^{**1**} weist vorzugsweise höchstens 18, insbesondere höchstens 6 Kohlenstoffatome auf. Bevorzugte Beispiele für die Alkylreste **R**^{**1**} sind der Methyl-, Ethyl-, n-Propyl-, iso-Propyl-, n-Butyl-, iso-Butyl-, sec.-Butyl-, tert.-Butyl-, n-Pentyl-, iso-Pentyl-, neo-Pentyl-, tert.-Pentylrest; Hexylreste, wie der n-Hexyl-, 2,3-Dimethylbutyl-, 3,3-Dimethylbutylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptyl-, Cyclooctyl-, Norbornylreste und Methylcyclohexylreste.

Beispiele für substituierte Reste **R**^{**1**} sind Cyanoalkylreste, wie der β-Cyanoethylrest, und halogenierte Alkylreste wie der 3,3,3-Trifluor-n-propylrest, der 2,2,2,2',2',2'-Hexafluorisopropylrest und der Heptafluorisopropylrest.

Bevorzugt als Halogenatom **X** ist das Chloratom. Bevorzugt als **X** sind gegebenenfalls mit Fluor-, Chlor-, Bromatomen oder Cyanogruppen substituierte Alkoxyreste mit 1 bis 6 Kohlenstoffatomen, wie der Methoxy-, Ethoxy-, n-Propoxy-, Isopropoxy-, n- Butoxy-, iso-Butoxy-, sec.-Butoxy-, tert.-Butoxyrest, Pentyloxyreste, wie der n-Pentyloxyrest und Hexyloxyreste, wie der n-Hexyloxyrest. Die Methoxy- und Ethoxyreste sind besonders bevorzugt. Bevorzugt sind die nicht substituierten Alkoxyreste.

Der Rest R² weist vorzugsweise höchstens 18, insbesondere höchstens 6 Kohlenstoffatome auf. Bevorzugte Beispiele für die Reste R² sind die für R¹ angegebenen Alkylreste.

Bevorzugte Beispiele für substituierte Reste R² sind die für R¹ angegebenen substituierten Alkyl- reste.

Bevorzugt als Halogenatom Y ist das Chloratom.

Bevorzugte Aktivatoren sind C₁- bis C₆- Alkyltrichlorsilane, wie Methyltrichlorsilan, Propyltrichlorsilan, Cyclopentyltrichlorsilan und Trichlorsilan.

Die aufzuwendende Menge an Aktivatoren beträgt vorzugsweise 0,5 - 30 Gew.-%, insbesondere 5 % - 15 Gew. % des Gesamtansatzes.

Als Übergangsmetallkatalysatoren sind im Prinzip die gängigen Hydrosilylierungskatalysatoren verwendbar. Besonders geeignet sind die Elemente und Verbindungen des Rhodiums und insbesondere des Platins. Bevorzugte Rhodium-Komplexe sind RhCl₃/PPh₃-Überschuß, ClRh(PPh₃)₃ (Wilkinson Katalysator) und HRh(CO)(PPh₃)₂.

Die Platin-Katalysatoren sind z.B. Lösungen von Hexachloroplatinsäure oder H₂PtCl₆ x 6 H₂O in Alkoholen wie Isopropanol (Speier Katalysator), Olefin-Komplexe wie der Karstedt-Katalysator (Pt(ViMe₂SiOSiMe₂Vi)₃) oder Phosphin-Komplexe wie Cl₂Pt(PPh₃)₂. Platin kann auch auf festen Trägermaterialien wie Aktivkohle, Aluminiumoxid oder Kieselgel abgeschieden sein. Der bevorzugte Hydrosilylierungskatalysator ist Hexachloroplatinsäure/Isopropanol bzw. Verdünnungen davon, z.B. in Cyclopenten oder in inerten Lösungsmitteln, wie Kohlenwasserstoffen.

Übergangsmetallkatalysatoren werden vorzugsweise in einer Konzentration von 10⁻⁶ - 10⁻² Mol, insbesondere 10⁻⁵ - 10⁻³ Mol, Katalysator pro Mol Silan der allgemeinen Formel (I) oder umgerechnet 2 - 300 mg Platin pro Mol Silan der allgemeinen Formel (I) eingesetzt. Aus wirtschaftlichen Gründen wird eine Katalysatormenge von 10 - 100 mg Pt/Mol Silan besonders bevorzugt. Davon kann je nach Temperaturführung eine erhebliche Menge durch Rückführung der löslichen Pt-Anteile nach der Entfernung der Produkte, z.B. über eine Kurzweg-Destillation, wiederverwendet werden.

Die Reaktionstemperatur kann in einem sehr weiten Bereich variiert werden. Das Optimum hängt dabei in 1. Linie von den Reaktanden, insbesondere vom Alken **A** und der Katalysatorkonzentration ab. Vorzugsweise beträgt die Temperatur 30 bis 190°C, insbesondere 70 bis 150°C, da dann die Gefahr der Akkumulation von Reaktionsenergie und der Zersetzung von Katalysator bzw. des Erreichen des Zündpunkts der Reaktionsmischung weitgehend vermieden wird.

Vorzugsweise werden pro Mol der Mono- und Dialkylsilane der allgemeinen Formel (II) etwas mehr als 1 Mol Alken **A** eingesetzt. Vorzugsweise wird ein geringer Überschuß an Alken **A** von mindestens 2 %, insbesondere 1,05 - 1,5 Mol, vorzugsweise 1,1 - 1,3 Mol, pro Mol Silan der allgemeinen Formel (II) eingesetzt.

Da die Reaktion insgesamt stark exotherm ist, empfiehlt es sich, im batch-Betrieb den Aktivator vorzulegen und mindestens eine Komponente während der Reaktion kontinuierlich zu dosieren und so die Innentemperatur nahezu konstant zu halten.

Zur Herstellung der Mono- und Dialkylsilane der allgemeinen Formel (II), deren Reste **R**^{**1**} mindestens 2 Kohlenstoffatome aufweisen, werden vorzugsweise Silane der allgemeinen Formel (IV)

R¹ _{b-1}SiHₑX_{c} (IV),

mit Alkenen **B** mit mindestens 2 Kohlenstoffatomen, welche gegebenenfalls mit Fluor-, Chlor-, Bromatomen oder Cyanogruppen substituiert sind,
in Gegenwart von Übergangsmetallkatalysator umgesetzt, wobei **e** die Werte 2 oder 3 bedeutet und
**R**^{**1**}**, X, b** und **c** die vorstehenden Bedeutungen aufweisen.

In einer bevorzugten Ausführungsform werden die Mono- und Dialkylsilane der allgemeinen Formel (II) im selben Reaktor hergestellt, in dem das erfindungsgemäße Verfahren zur Herstellung der Di- und Trialkylsilane der allgemeinen Formel (I) durchgeführt wird (Eintopfreaktion). Die Mono- und Dialkylsilane der allgemeinen Formel (II) werden dabei vorzugsweise nicht isoliert sondern direkt mit Alken **A** umgesetzt.

Die Silane der allgemeinen Formel (II) können aber auch durch metallorganische Alkylierung von Chlor- oder Alkoxysilanen der allgemeinen Formel

X_{c+1}SiHₐ

oder Hydridübertragung auf Alkylsilane der allgemeinen Formel

R¹ _{b}SiX_{c+1}

hergestellt werden, wobei **R**^{**1**}**, x, a, b** und **c** die vorstehenden Bedeutungen aufweisen.

Bei der Eintopfreaktion kann bei der Herstellung der Di- und Trialkylsilane der allgemeinen Formel (I) zu den vorgelegten Alkenen **A** und **B**, die den Übergangsmetall-Katalysator bereits gelöst enthalten, zunächst der Aktivator der allgemeinen Formel (III) und anschließend das Silan der allgemeinen Formel (IV) zudosiert werden.

Man kann aber auch umgekehrt vorgehen und Alken **A** und dann Alken **B** oder zuerst Alken **B** und dann Alken **A** zum vorgelegten Silan der allgemeinen Formel (IV) dosieren.

Bevorzugt wird der Aktivator der allgemeinen Formel (III) vorgelegt und anschließend die anderen Komponenten dosiert. Die Zugabe der Aktivatoren kann auch während der Reaktion erfolgen und verkürzt die Induktionsphase der Herstellung der Di- und Trialkylsilane der allgemeinen Formel (I) und führt insgesamt zu einer deutlichen Steigerung der Raum-Zeit-Ausbeute.

Die Herstellung der Di- und Trialkylsilane der allgemeinen Formel (I) kann, z.B. bei Druckkessel-Rührwerken, wiederum gut über die Innentemperatur bzw. die Wärmebilanz oder einfach über den jeweiligen Innendruck gesteuert werden. Der in der Gasphase über der Reaktionslösung meßbare Druck entspricht dabei weitgehend der Summe der temperaturbedingten Partialdrucke der noch nicht abreagierten Edukte. Bei besonders reaktiven Aktivatoren, wie z.B. Trichlorsilan, die dementsprechend kurze Halbwertszeiten haben, kann es von Vorteil sein, sie portionsweise und, zum Teil erst während der Herstellung der Di- und Trialkylsilane der allgemeinen Formel (I), nachzudosieren.

Über die dem Verbrauch entsprechende Dosierung mindestens einer Reaktionskomponente kann man z.B. über eine Druckanzeige den Prozeß gut steuern und Emissionen sowie insbesondere gefährliche Betriebszustände von vornherein vermeiden.

Dies ermöglicht auch vollkontinuierliche Additionsverfahren mit relativ kurzen Verweilzeiten von unter 30 Minuten, welche besonders sicher und wirtschaftlich sind.

Beim kontinuierlichen Verfahren wird das Trihalogensilan der allgemeinen Formel (III) konstant mit den anderen Edukten, vorzugsweise mit dem Silan der allgemeinen Formel (II) in den Reaktor dosiert.

Batch-Verfahren werden vorzugsweise im Autoklaven durchgeführt. Kontinuierliche Verfahren werden durch separate Dosierung der Edukte, z.B. in einen Rohr- oder Loopreaktor, der über ein Wärmeträgeröl thermostatisierbar ist, durchgeführt. Am Ende des kontinuierlichen Reaktors wird die nahezu vollständig umgesetzte Mischung beispielsweise über ein Überström- oder Druckhalte-Ventil geleitet und in einem Stahltank gesammelt.

In einer bevorzugten Ausführungsform wird nach der Hydrosilylierung das Reaktionsgemisch vorzugsweise destillativ aufgetrennt. Die Fraktion, in der sich die Silane der allgemeinen Formel (II) und das Trihalogensilan der allgemeinen Formel (III) befinden, wird in die Hydrosilylierung zurückgeführt. Vorzugsweise ist diese Fraktion der Vorlauf. Bei dieser Ausführungsform wird die Gesamtausbeute an Di- und Trialkylsilanen der allgemeinen Formel (I) stark erhöht.

Lösungsmittel sind nicht notwendig zur Herstellung der Di- und Trialkylsilane der allgemeinen Formel (I), können jedoch anwesend sein. Insbesondere bei einer dosierkontrollierten Reaktionsführung kann auf die Verdünnung durch inerte Solventien, wie es in vergleichbaren Hydrosilylierungen aus Sicherheitsgründen, z.B. zur Wärmeabführung empfohlen wird, verzichtet werden. Geringe Zusätze an polaren Lösungsmitteln, wie THF oder Isopropanol können bei der Dosierung des Platinkatalysators in sehr unpolare Medien von Vorteil sein.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .

### Beispiele

### Beispiel 1: (erfindungsgemäß mit HSiCl₃ als Trihalogensilan)

In einem 500 l Druckrührkessel mit Sicherheitsventil (auf 30 bar eingestellt) werden 190 kg Cyclopenten und 120 kg Dichlorsilan unter Rühren (300 U/min) vorgelegt. Anschließend wird die Katalysatorlösung (50 g H₂PtCl₆ * 6 H₂0 gelöst in 1 l Isopropanol) dosiert. Der Reaktorinhalt wird aufgeheizt, die exotherme Reaktion springt bei ca. 90°C an, wobei die Temperatur auf 150°C und der Druck auf 21 bar steigt. Am Druckabfall im Reaktor ist der Reaktionsfortschritt erkennbar. Nach 2 Stunden Reaktionszeit bei 130°C beträgt der Innendruck 10 bar und es werden 23 kg Trichlorsilan zudosiert. Nach weiteren 9 Stunden ist eine zweite deutlich exotherme Reaktion erkennbar (Temperaturanstieg bis 153°C). Nach nochmals 9 Stunden (Gesamtreaktionsdauer 21 h) bei 130 - 140°C Reaktionstemperatur ist der Druck im Reaktor auf 4 bar abgefallen. Der Reaktor wird abgekühlt und entleert. Man erhält 329 kg Rohprodukt, bestehend aus 58,6 % Dicyclopentyldichlorsilan, 12,0 % Cyclopenten, 13,3 % CpSiHCl₂, 9,4 % CpSiCl₃ und nur 6,7 % nicht weiter nutzbarer Nebenprodukte.

### Beispiel 2: (nicht erfindungsgemäß mit Aceton als Aktivator)

In einem 500 l Druckrührkessel werden 200 kg Cyclopenten und 140 kg Dichlorsilan vorgelegt. Der Ansatz wird analog Beispiel 1 durchgeführt, anstelle des Trichlorsilans werden bei einem Innendruck von 10 bar 4 l Aceton dosiert. Nach 15 Stunden Reaktionszeit ist die zweite exotherme Reaktion erkennbar (Temperaturanstieg bis 158°C). Nach weiteren 7 Stunden (Gesamtreaktionsdauer 22 h) bei 130 - 140°C beträgt der Reaktorinnendruck 5 bar. Der auf Raumtemperatur abgekühlte, nun drucklose Ansatz wird über das Bodenventil abgefüllt. 342 kg Rohprodukt besteht aus 57,6 % Dicyclopentyldichlorsilan, 13,0 % Cyclopenten, 14,4 % CpSiHCl₂, 3,3 % CpSiCl₃ und 11,7 % nicht weiter nutzbarer Nebenprodukte (z.B. CpPropylSiCl₂).

### Beispiel 3: (erfindungsgemäß mit Vorlaufrückführung)

In einem 500 1 Druckrührkessel werden 60 kg Destillations-Vorlauf, hauptsächlich bestehend aus CpSiCl₃ (ca. 35 %) und CpSiHCl₂ (ca. 60 %), 130 kg Dichlorsilan und 195 kg Cyclopenten vorgelegt. Wie in Beispiel 1 beschrieben wird der Katalysator zugegeben und der Reaktorinhalt aufgeheizt, wobei die Reaktion anspringt und max. 164°C Innentemperatur und 18 bar Druck erreicht werden. Anschließend wird der Ansatz bei ca. 130°C gehalten (9 bar Innendruck). Nach 13 h Reaktionszeit ist durch Temperaturanstieg auf 161°C die zweite exotherme Reaktion feststellbar. Nach einer Gesamtreaktionsdauer von 25 h und einem Innendruck von 4 bar bei 132°C wird der Kesselinhalt abgekühlt. Man erhält 380 kg Rohprodukt mit einem Gehalt von 70,8 % Dicyclopentyldichlorsilan. Nach dem GC sind außerdem 3,4 % Cyclopenten, 9,5 % CpSiHCl₂, 6,0 % CpSiCl₃ und 10,3 % nicht weiter nutzbarer Nebenprodukte enthalten.

### Destillation:

In einer Destillationseinheit mit Kolonne und 1500 1-Blase werden drei Ansätze mit Rohprodukt und Fraktion 2 der vorhergehenden Destillationseinlage zusammengefaßt und diskontinuierlich destilliert. Die Vorlage wird unter Normaldruck langsam aufgeheizt bis 150 l/h Rückfluß anfallen. Anschließend wird Destillat (Leichtsieder, wie Cyclopenten und SiCl₄) abgenommen, bis eine Sumpftemperatur von 130°C erreicht wird. Die Vorlage wird auf 250°C abgekühlt, langsam ein Vakuum von unter 50 mbar eingestellt und wiederum aufgeheizt. Das anfallende Destillat wird in mehreren Fraktionen abgenommen. Fraktion 1 (Menge 180 kg, Druck 50 mbar, Temperatur 30-100°C) entspricht dem Vorlauf und wird bei der Reaktion wieder eingesetzt (s. oben), Fraktion 2 (180 kg, 1 mbar, 100 - 110°C) wird bei der folgenden Destillationseinlage wieder eingesetzt und Fraktion 3 (820 kg, 1 mbar, 111 - 116°C) ist der Hauptlauf, in dem das Zielprodukt Dicyclopentyldichlorsilan in > 95 %iger Reinheit enthalten ist.

## Patentansprüche

1. Verfahren zur Herstellung von Di- und Trialkylsilanen der allgemeinen Formel (I)
RₐR¹ _{b}SiX_{c} (I)
bei dem
Mono- oder Dialkylsilane der allgemeinen Formel (II)
R¹ _{b}SiHₐX_{c} (II),
mit Alkenen **A** mit mindestens 3 Kohlenstoffatomen, welche gegebenenfalls mit Fluor-, Chlor-, Bromatomen oder Cyanogruppen substituiert sind,
in Gegenwart von Übergangsmetallkatalysator und Trihalogensilan der allgemeinen Formel (III)
R²SiY₃ (III),
als Aktivator, umgesetzt werden,
wobei in den vorstehenden allgemeinen Formeln (I) bis (III)
**R** gegebenenfalls mit Fluor-, Chlor-, Bromatomen oder Cyano-gruppen substituierte verzweigte oder cyclische Kohlenwasserstoffreste mit mindestens 3 Kohlenstoffatomen,
**R**^{**1**} gegebenenfalls mit Fluor-, Chlor-, Bromatomen oder Cyano-gruppen substituierte Alkylreste,
**R**^{**2**} Wasserstoffatom oder gegebenenfalls mit Fluor-; Chlor-, Bromatomen oder Cyano-gruppen substituierte Alkylreste,
**X** Fluor-, Chlor-, Bromatome oder gegebenenfalls mit Fluor-, Chlor-, Bromatomen oder Cyanogruppen substituierte Alkoxyreste mit 1 bis 18 Kohlenstoffatomen,
**Y** Fluor-, Chlor- oder Bromatome,
**a** die Werte 1 oder 2,
**b** die Werte 1 oder 2 und
**c** die Werte 1 oder 2 bedeuten.

2. Verfahren nach Anspruch 1, bei dem die Alkene **A** verzweigt oder cyclisch sind und bis 18 Kohlenstoffatome aufweisen.

3. Verfahren nach Anspruch 1 oder 2, bei dem der Rest **R**^{**1**} höchstens 18 Kohlenstoffatome aufweist.

4. Verfahren nach Anspruch 1 bis 3, bei dem der Rest **R**^{**2**} höchstens 18 Kohlenstoffatome aufweist.

5. Verfahren nach Anspruch 1 bis 4, bei dem **Y** ein Chloratom bedeutet.

6. Verfahren nach Anspruch 1 bis 5, bei dem die Menge an Aktivator 0,5 - 30 Gew.-% des Gesamtansatzes beträgt.

7. Verfahren nach Anspruch 1 bis 6, bei dem nach der Hydrosilylierung das Reaktionsgemisch destillativ aufgetrennt und die Fraktion, in der sich die Silane der allgemeinen Formel (II) und das Trihalogensilan der allgemeinen Formel (III) befinden, in die Hydrosilylierung zurückgeführt wird.

## Claims

1. Process for the preparation of di- and trialkylsilanes of the general formula (I)
RₐR¹ _{b}SiX_{c} (I),
in which
mono- or dialkylsilanes of the general formula (II)
R¹ _{b}SiHₐX_{c} (II)
are reacted with alkenes A having at least 3 carbon atoms, which are optionally substituted by fluorine, chlorine or bromine atoms or cyano groups,
in the presence of a transition metal catalyst and a trihalogenosilane of the general formula (III)
R²SiY₃ (III)
as an activator,
wherein, in the above general formulae (I) to (III),
R is branched or cyclic hydrocarbon radicals which have at least 3 carbon atoms and are optionally substituted by fluorine, chlorine or bromine atoms or cyano groups,
R¹ is alkyl radicals which are optionally substituted by fluorine, chlorine or bromine atoms or cyano groups,
R² is a hydrogen atom or alkyl radicals which are optionally substituted by fluorine, chlorine or bromine atoms or cyano groups,
x is fluorine, chlorine or bromine atoms or alkoxy radicals which have 1 to 18 carbon atoms and are optionally substituted by fluorine, chlorine or bromine atoms or cyano groups,
Y is fluorine, chlorine or bromine atoms,
a is the values 1 or 2,
b is the values 1 or 2 and
c is the values 1 or 2.

2. Process according to Claim 1, in which the alkenes A are branched or cyclic and have up to 18 carbon atoms.

3. Process according to Claim 1 or 2, in which the radical R¹ has at most 18 carbon atoms.

4. Process according to Claims 1 to 3, in which the radical R² has at most 18 carbon atoms.

5. Process according to Claims 1 to 4, in which Y is a chlorine atom.

6. Process according to Claims 1 to 5, in which the amount of activator is 0.5 - 30% by weight of the total mixture.

7. Process according to Claims 1 to 6, in which after the hydrosilylation the reaction mixture is separated by distillation and the fraction containing the silanes of the general formula (II) and the trihalogenosilane of the general formula (III) is recycled into the hydrosilylation.

## Revendications

1. Procédé de préparation de di- et trialkylsilanes de formule générale (I)
RₐR¹ _{b}SiX_{c} (I),
dans laquelle
des mono- ou dialkylsilanes de formule générale (II)
R¹ _{b}SiHₐX_{c} (II),
sont mis à réagir avec des alcènes A ayant au moins 3 atomes de carbone, qui sont éventuellement substitués par des atomes de fluor, de chlore ou de brome ou des groupes cyano,
en présence d'un catalyseur à métal de transition et d'un trihalogénosilane de formule générale (III)
R²SiY₃ (III),
en tant qu'activateur,
où dans les formules générales (I) à (III) ci dessus
R représente des radicaux hydrocarbonés ramifiés ou cycliques ayant au moins 3 atomes de carbone, éventuellement substitués par des atomes de fluor, de chlore ou de brome ou des groupes cyano,
R¹ représente des radicaux alkyle éventuellement substitués par des atomes de fluor, de chlore ou de brome ou des groupes cyano,
R² représente un atome d'hydrogène ou des radicaux alkyle éventuellement substitués par des atomes de fluor, de chlore ou de brome ou des groupes cyano,
X représente des atomes de fluor, de chlore ou de brome ou des radicaux alcoxy ayant de 1 à 18 atomes de carbone, éventuellement substitués par des atomes de fluor, de chlore ou de brome ou des groupes cyano,
Y représente des atomes de fluor, de chlore ou de brome,
a vaut 1 ou 2,
b vaut 1 ou 2 et
c vaut 1 ou 2.

2. Procédé selon la revendication 1, dans lequel les alcènes A sont ramifiés ou cycliques et renferment jusqu'à 18 atomes de carbone.

3. Procédé selon la revendication 1 ou 2, dans lequel le radical R¹ renferme au plus 18 atomes de carbone.

4. Procédé selon les revendications 1 à 3, dans lequel le radical R² renferme au plus 18 atomes de carbone.

5. Procédé selon les revendications 1 à 4, dans lequel Y représente un atome de chlore.

6. Procédé selon les revendications 1 à 5, dans lequel la quantité d'activateur est de 0,5 à 30% en poids du mélange total.

7. Procédé selon les revendications 1 à 6, dans lequel après l'hydrosilylation, le mélange réactionnel est séparé par distillation et la fraction contenant les silanes de formule générale (II) et le trihalogénosilane de formule générale (III) est renvoyée à l'hydrosilylation.
